# EUROPEAN PATENT APPLICATION

(11) **EP 1 503 238 A1**
(43) Date of publication of application: **02.02.2005**
(21) Application number: 04254550.9
(22) Date of filing: 29.07.2004
(51) Int. Cl.: G03B 21/00, H04N 5/64

(54) **Projector mount**

(30) Priority: 29.07.2003 GB 0317678
(71) Applicant: Tempus Computers Limited, Birmingham B3 1RB (GB)
(72) Inventor: Rixom, Christopher Paul, Kidderminster, Worcestershire DY11 6AT (GB)
(74) Representative: Barnfather, Karl Jon, Dr.

(57) **Abstract**

A projector ceiling mount comprising a support member adapted for attachment to the ceiling and a detachable member adapted for attachment to a projector and engagement means that allow the detachable member to be readily attached and locked to the support member and adjustment means that, in use, allow the horizontal position and tilt of a mounted projector to varied with respect to the mount.

## Description

This invention relates to projector mounts and in particular to mounts designed for attachment to ceilings.

Interactive white-board systems are being increasingly used for teaching, lecturing etc.. Such systems typically comprise a white board mounted to a wall of a room and a LCD projector mounted to the room ceiling. The LCD projector in particular is expensive. When used in educational establishments such projectors are particularly vulnerable to theft. The high cost of LCD projectors also provides an incentive for a single projector to be shared by users in a number of separate rooms. Movement of a projector from one room to another presents raises additional security issues.

Projector mounts are known where the projector is bolted to a detachable member of a mount. On occasions it may be desirable to use to a projector bolted to such a detachable member on a Worksop or the like. Known projector mounting systems do not readily allow such dual use.

When LCD projectors for interactive white board systems are mounted to a ceiling structural limitations often prevent the mount being located the ideal distance from the board. This can result in it being impossible to obtain a focussed image on the white-board that is within the comer margin limits of the board. In such circumstances the user looses certain essential functions of software. Also, known mounts employ poles. The required length of such a pole depends upon the height of the ceiling and typically may vary from 0.3 m to 2m. Such poles are normally secured to a ceiling mounting plate by a bolt that passes diametrically through a tubular sleeve in the mounting plate and also diametrically through the pole. Such poles are pre-drilled as it is difficult to accurately drill the required diametrically located holes in a pole on-site. This means that typically a range of pole lengths have to be manufactured and stocked by suppliers.

An object of the present invention is to provide an improved projector mount, and in particular facilities that allows rapid detachment of a projector, for use either conventionally or on part of another mount; while at the same time affording improved security. A further object of the invention is to provide a projector mounting system that readily allows adjustment of the distance between the projector and a screen; such as a LCD projector and a white-board. Yet a further object is to provide a projector mounting system that reduces the possibility of accidental detachment of the projector from the mount.

In one aspect the invention comprises a projector mount having a support member adapted for direct or indirect attachment to the structure of a building and a detachable member adapted for attachment to a projector; and located within the detachable member, locking means that operably engage the support member. Preferably, when the locking means is in a closed position the locking means lockingly engages part of the support member and when in the open position the locking means is substantially withdrawn into the body of the support member. This allows the projector and detachable member to be readily detached from the support member for use with another support member or for conventional use on a work surface. It also means that only one lock is required when the projector is being used in several locations; this feature makes the use of a high security type lock more attractive, as such locks are relatively expensive. The locking means may comprise a retractable catch. In use the detachable member may pivot about a vertical axis. The detachable member may be attached to the support member by engagement means comprising a recess on one of the members and a protrusion on the other member; wherein the detachable member is attachable to the support member by inserting the protrusion within the recess along a first axis and then sliding one member relative to the other along a second axis. Preferably, the first axis is approximately perpendicular to the second axis. The recess may be keyhole in shape. Typically, the support member comprises a ceiling mounting plate, a pole and an engagement element and is adapted for attachment to the ceiling of a building. The locking means may comprise a pivotable member. Preferably, the locking means comprising a barrel lock. The detachable member may have adjustable feet so that when the detachable member is detached an attached projector may be used by resting the feet on a surface. Adjustment means may be provided to allow the detachable member in use to be moved in a horizontal direction. This horizontal movement may be obtained by means of a rotating member operated by a user said rotating member engaging the docking plate. The support member may include an engagement member and a docking plate is slidably mounted to the engagement member. The rotatable member may comprise a friction wheel or a gear wheel. Preferably, electrical dockimg means are provided between the engagement member and the detachable member.

In another aspect the invention comprises a projector mount having an engagement member adapted for direct or indirect attachment to a building structure and a mounting plate adapted for attachment to a projector wherein adjustment means is provided to allow the mounting plate to be moved in a horizontal direction relative to the engagement element in use. This allows the distance between the projector and screen to be readily adjusted. Preferably, the mounting plate or the engagement member has an elongate slot that abuts against a stop attached to the engagement member or mounting plate respectively thereby to limit the extent of horizontal movement. The mounting plate may have abutment means that limit the extent of tiltable adjustment. The abutment means may comprise a tag that abuts against an aperture or recess in the engagement member. The mounting plate may have a triangular slot and/or a "V-shaped" bifurcated element that co-operates with the abutment means. Preferably, electrical docking means are provided between the engagement member and the detachable member.

In a further aspect the invention comprises a projector mount having a support member adapted for direct or indirect attachment to the structure of a building and a detachable member adapted for attachment to a projector; engagement means comprising a recess on one of the members and a protrusion on the other member; wherein the detachable member is attachable to the support member by inserting the protrusion within the recess along a first axis and then sliding one member relative to the other along a second axis.

Specific embodiments of the invention will now be described by way of example only by reference to the following diagrammatic figures in which;
Figure 1 is a perspective view of a projector ceiling mount according to a first embodiment of the invention;
Figure 2 is a perspective view of the fixing plate of the mount of Figure 1;
Figure 3 is a perspective view of part of engagement element shown in Figure 1;
Figure 4 is a perspective view of a further part of the engagement element shown in Figure 1;
Figures 5a and 5b are perspective views of part of the mount according to a second embodiment of the invention;
Figure 6 is a view in exploded form corresponding to Figure 5a;
Figure 7 is a perspective view of a detachable part of the mount, according to a second embodiment:
Figure 8 is a view in exploded form corresponding to Figure 7;
Figure 9 is a perspective front view of the parts shown in Figures 5 and 7, attached and in a locked state;
Figure 10 is a rear view corresponding to Figure 9; and
Figure 11 is a perspective view of a third embodiment of the invention where the detachable member forms an integral part of the base of a projector.

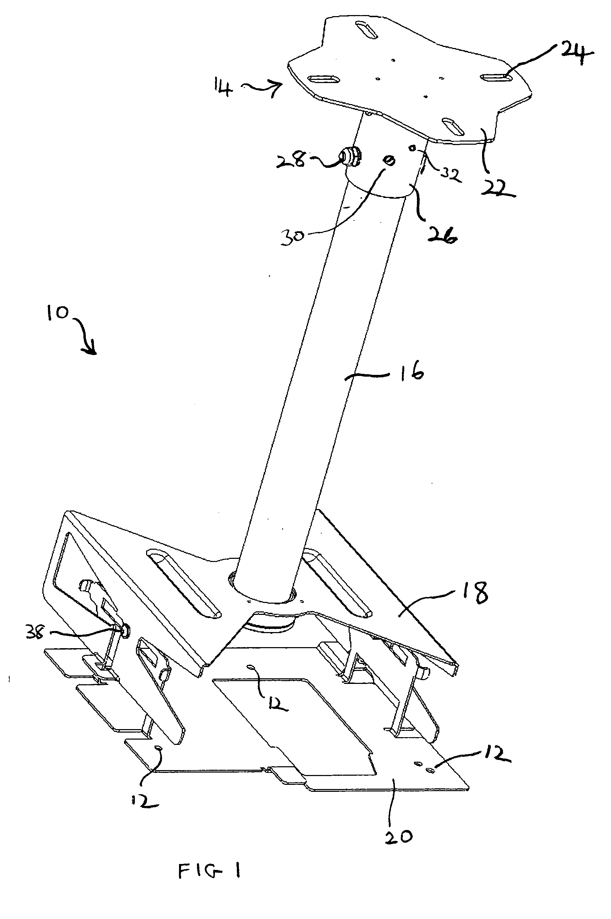

A first embodiment of the invention will now be described by reference to Figures 1 to 4. Referring to Figure 1; the projector ceiling mount 10 comprises a ceiling fixing plate 14, a pole 16, an engagement element 18; and a projector mounting plate 20.

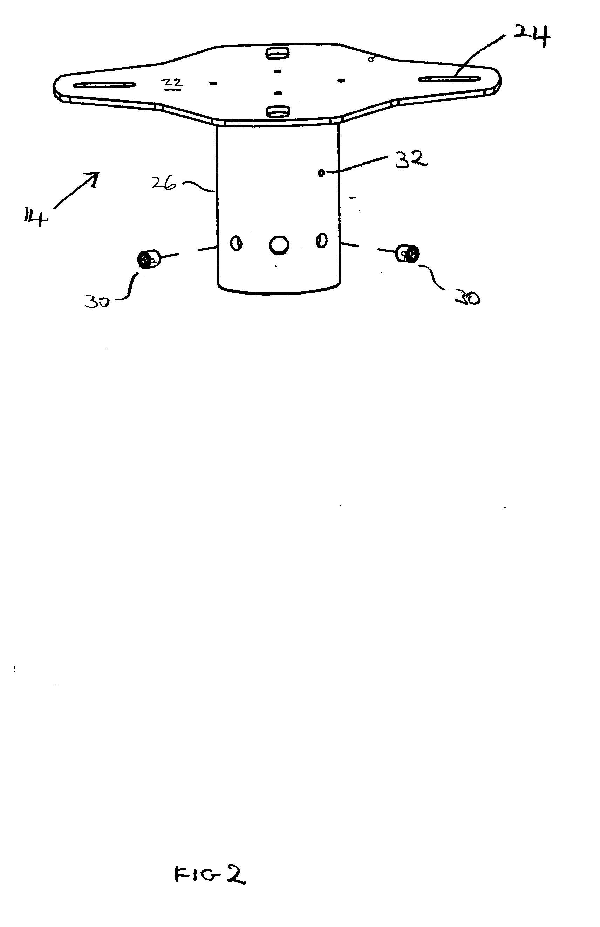

The ceiling fixing plate 14 (see Figure 2) comprises a central portion from which four arms 22 radiate; each arm having a slot 24 through which a bolt or screw may pass to fix the plate to a ceiling. A central tubular sleeve 26 depends downwardly from the central portion of plate 14 and houses the upper end of mounting pole 16. The upper end of pole 16 is secured within sleeve 26 by means of a nut and bolt 28 that passes through circular holes located diametrically on both the pole 16 and the sleeve 26. A pair of threaded grub screws 30 are located in threaded bores within sleeve 26 in order to allow the pole to be held in place, by tightening the screws 30, prior to securing using bolt 28. As supplied for assembly, a pair of drill guide holes 32 (only one shown) are located diametrically on sleeve 26. This allows a pole, cut to the required length, to be accurately drilled on site and so avoids the need for manufacturing a range of poles. Thus, the upper end of an undrilled pole that has been cut to length is located in sleeve 26 and grub screws 30 are tightened to hold the pole in place. A suitable sized drill is then inserted in one of the guide holes 32 and the pole 16 is at least partly drilled; so as to form a starting indent or hole for a larger drill. This procedure is then repeated for the other guide hole 32. The pole 16 is then removed from sleeve 26 and a pair of diametrically located holes, sized to accept bolt 28, are drilled using these starting indents/holes.

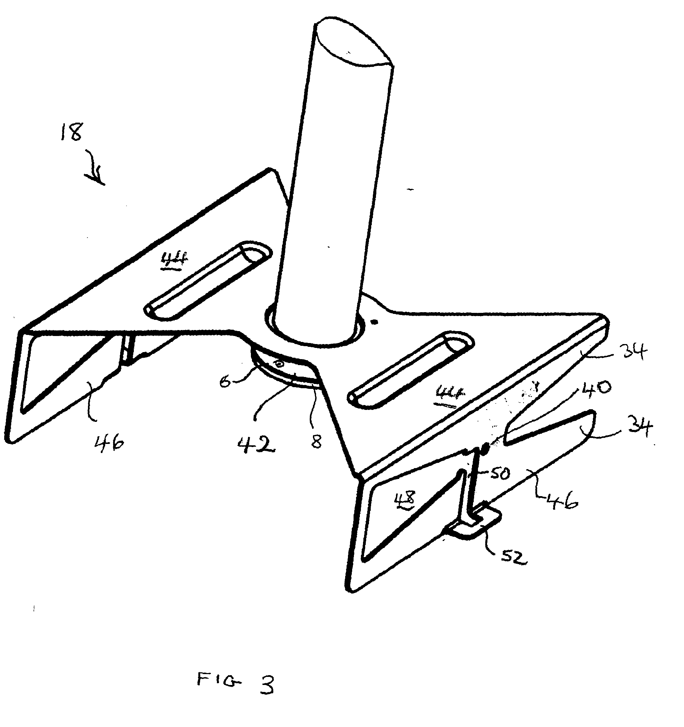

Engagement element 18 (see Figure 3) comprises a a central collar 42 adapted to allow the upper end of pole 16 to slide therethrough. The lower end of pole 16 has an integral annular flange 8 which prevents removal of collar 42 from the lower end of the pole. In use, rotation of the collar etc. about the axis of pole 16 is prevented by a pair of grub screws 6 and threads in the collar (only one shown) that may be tightened to grip the pole. A pair of arms radiate from collar 42. Each arm comprises a substantially planar top face 44 and a side face 46 that extends in a direction generally orthogonal to top face 44. Each side portion 46 has a centrally located hole 40 to accommodate an adjustment bolt 38 (see latter). The front portion of side faces 46 each have a triangular shaped aperture 48 the apex of which is continuous with a vertical slot 50, which slot extends to the lower edge of the side face. U-shaped member 52 bridges the gap at the lower edge of side face 46 formed by the slot. The rear portion 34 of side faces 46 are of bifurcated form.

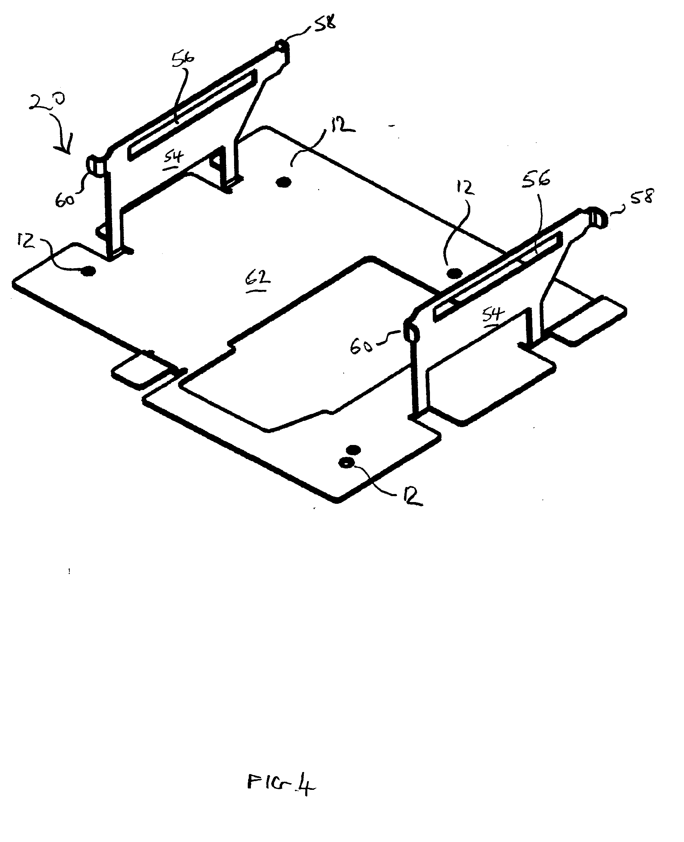

Mounting plate 20 (see Figures 1 and 4) is attached to engagement element 18 by bolts 38 which provide means of adjusting both the tilt of mounting plate 20 and also the horizontal position of plate 20 relative to element (member) 18. This is achieved by providing side members 54 that project upwardly from floor plate 62 (see Figure 4); each of the members 54 having an elongate horizontal slot 56. Bolts 38 (see Figure 1) have locking nuts that grip the edges of slots 56. Thus, if bolts 38 are slackened mounting plate 20 may be slid and tilted by the combined action of bolts 38 and slots 56 and holes 40; and may then be held in the required position by tightening bolts 38 and their nuts against sides 54. The ability to adjust the horizontal position of mounting plate 20 (and hence a mounted projector) without moving fixing plate 14 allows a greater degree of adjustment during setting up of a projection system.

Side members 54 each have a rear tag 58 and a front tag 60. These tags co-operate with apertures 48 and 50 and bifurcated portion 40 of the engagement member 18 as follows: When mounting plate 20 is pivotally connected to engagement member 18 the extent that mounting plate may be tilted either side of horizontal by adjustment as described above is limited as a result of the upper or lower edge of tabs 58 and 60 abutting against the inner edges of a bifurcated portion 36 of side face 34, and the similar edges of triangular aperture 48. Apertures 48 and 50 serve a further function: when bolts 38 are removed during detachment of mounting plate 20 these tabs co-operate with aperture 48 (and also bifurcated portions 36) to prevent the mounting plate falling free of the rest of the mount. Such a mishap is likely to result in severe damage to any projector attached to plate 20. Thus, in order to remove plate 20 from engagement member 18 it is necessary not only to remove bolts 38 but also to vertically align tab 60 with vertical slot 50; in this position the mounting plate 20 can be lowered clear of the engaging member 18. As well as allowing vertical movement of plate 20; bridging member 52 also strengthens side faces 54.

A projector (not shown) is attached to floor plate 62 using security bolts that pass through fixing holes 12 (see Figure 4). The configuration of plate 62, and in particular the size and location of apertures, is determined by the particular model of projector to be attached.

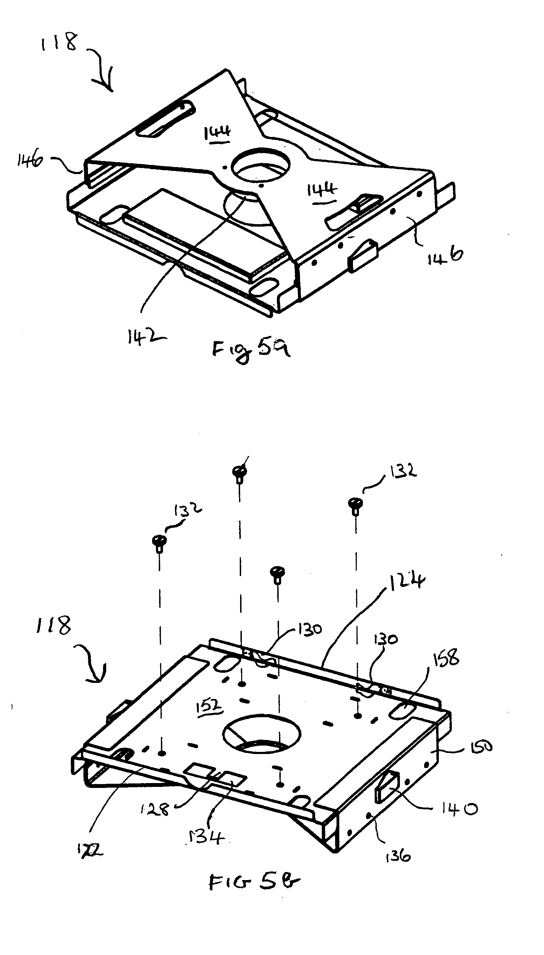

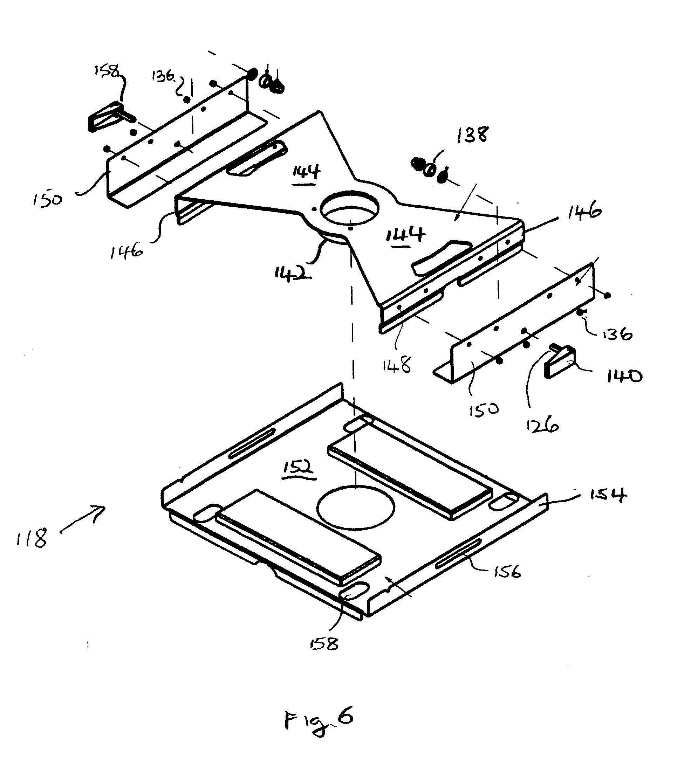

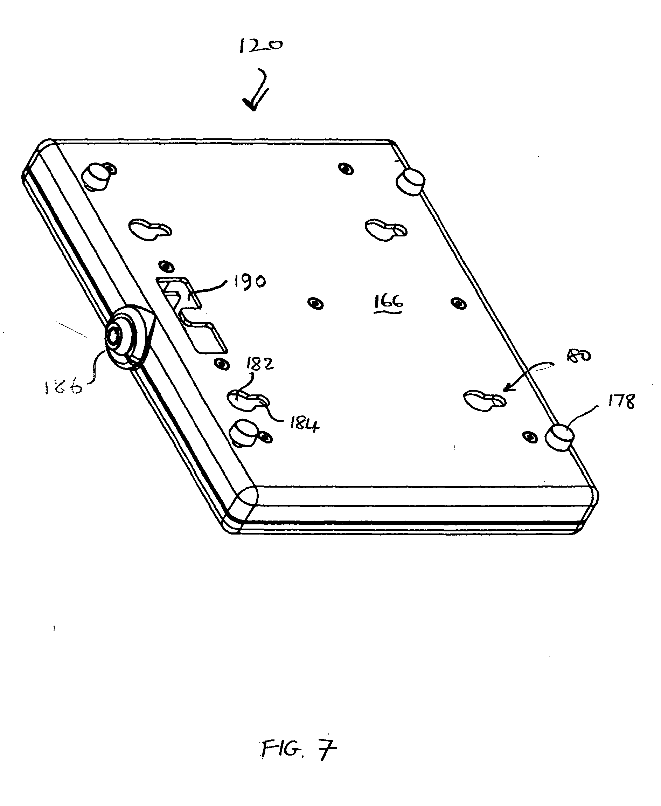

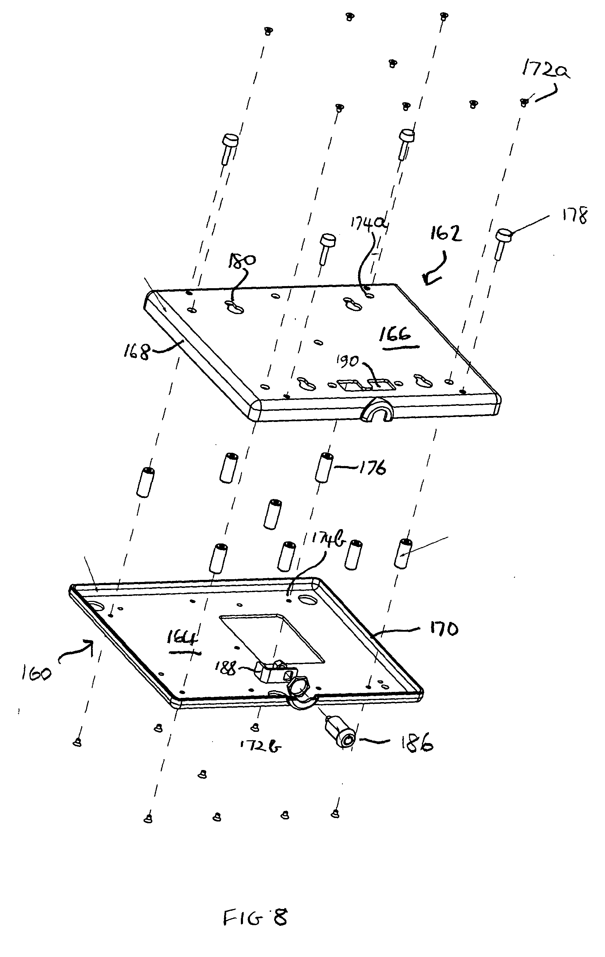

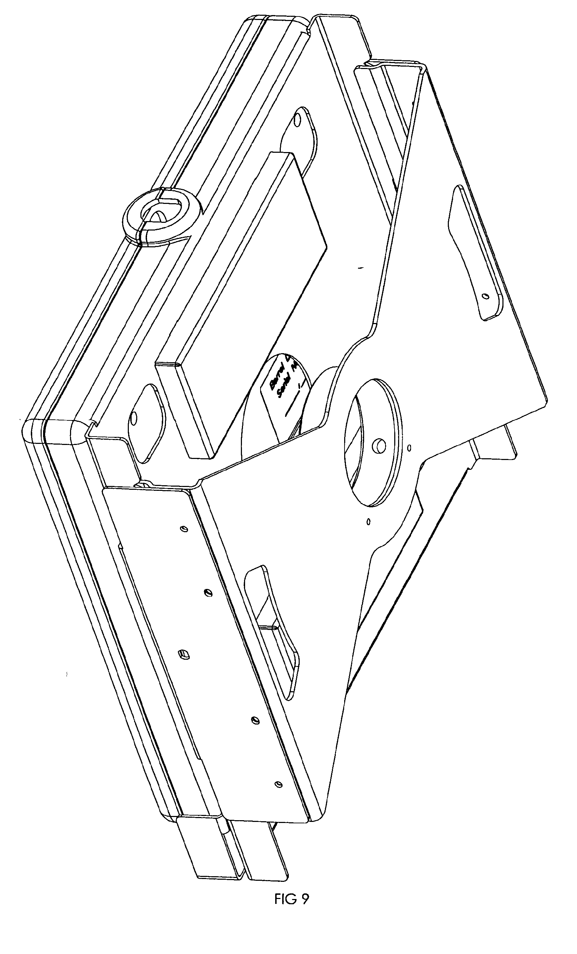

A second embodiment of the invention will now be described by reference to Figures 5 to 10. Again this embodiment comprises the ceiling fixing plate 14 and a pole 16 as described above for the first embodiment, an engagement element 118 (see Figures 5 and 6) and a detachable member 120 (see Figures 7 and 8). This embodiment differs from that described above in respect of the engagement element 118 and detachable member 120.

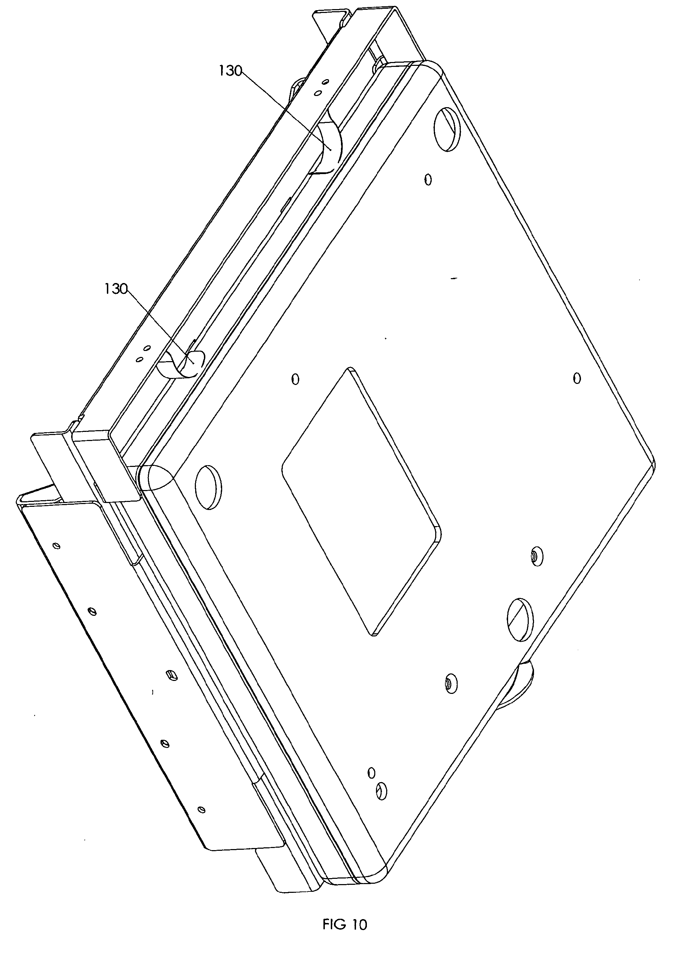

Engagement element 118 comprises a central collar 142 which is locked to the lower end of pole 16 in exactly the same way as described above for the first embodiment. A pair of arms radiate from collar 142. Each arm comprises a substantially planar top face 144 and a side face 146 that extends in a direction generally orthogonal to top face 144. Each side face 146 has a plurality of holes 148 that are provided to fix angled side bars 150 to side faces 148 by means of security bolts 136. Engagement member 118 also comprises a docking plate 152 which has apertures and recesses configured to match the adjacent face of engagement member 118 when attached thereto. Thus, docking plate 152 has oval apertures 158 that accommodate feet on the lower face of engagement member 118. Docking plate 152 has vertically extending side faces 154, each of which has an elongate horizontal slot 156. Docking plate 152 is slidably mounted to the rest of the engagement member 118; thus, the side 154 and edges of plate 152 may slide along the inner face of angled side bars 150. The extent of such movement is limited by spindles 126 that abut an end of horizontal slot 156; spindle 126 being mounted to angled side bars 150 so as to allow either pivotal or rotational movement. Each spindle 126 has a knob 140 attached to the outer end and a friction wheel assembly 138 attached to the inner end. Hence, rotational movement of knob 140 by a user results in wheel assembly 138 fractionally engaging the upper face of plate 152 and thereby moves that plate in a horizontal direction relative to the engagement member. The wheel assembly comprises a wheel made of resilient material, in order to facilitate frictional contact with plate 152. Thus, horizontal adjustment means are provided by the combination of plate 152, slots 156, side bars 150, knobs 140, spindles 126 and frictional wheel assemblies 138. The rear edge of plate 152 has an upwardly projecting rim 124 to which are attached a pair of leaf springs 130 (see Figures 5b and 10) . In use, springs 130 urge the detachable member 120 against a front rim 122 of plate 152; the purpose of which is to prevent the detachable member accidentally falling free of the engagement member during removal. A "U-shaped" slot 134 (see Figure 5) is provided for securing purposes (see latter).

Figure 7 shows the detachable member 120 assembled and Figure 8 shows it in exploded view form. Detachable member 120 comprises two sections; a first section 160 and a second section 162 comprising rectangular plates 164,166 with rims 168, 170. Plates 166 and 168 are held together by 8 pairs of screws 172a, 172b that pass through holes 174a and 174b in the plates and engage spacer columns 176 that are threaded at each end. The second section 162 has four feet 178 each of which may be independently adjusted by means of a threaded connection between the foot and the plate 166. The feet preferably have ends that provide resilient support.

Plate 166 has four keyhole shaped recesses 180 or slots, spaced to correspond to the configuration of the four protruding bolt heads 132, provided on the engagement element 118. Each keyhole slot comprises a circular hole 182 and an extension portion 184 corresponding to a rectangular plus semicircular hole. Keyhole 180 is sized to allow bolt heads 132 to be inserted within hole 182 and then slid along extension portion 184 so that the protruding head is locked under portion 184 and may only be unlocked by reversing the above sliding motion. Thus, the bolt heads 132 are inserted along the central axis of circular holes 182 and then locked in the keyhole by sliding the protrusion along a second axis, the second axis being located radially with respect to the first axis. The provision of four protruding bolt heads 132 and four keyholes 180 requires alignment of each protrusion and corresponding keyhole prior to locking connection as described above.

Engagement member 120 houses a barrel lock 186 with a central shaft, the lock being located between rims 168 and 170 of sections 160 and 162 respectively. A "L-shaped" catch 188 (see Figure 8) is pivotally mounted to the shaft of barrel lock 186. Figure 7 shows catch 188 in its open position. In this position the catch 180 is retracted within the member 120. In the open position catch 188 should at least be substantially withdrawn within the detachable member; to allow a projector attached to member 120 to rest unimpeded on a normal work surface; preferably only supported on feet 178. Catch 188 may take a variety of forms and is not limited to a "L-shaped" member. Upon insertion of a key in lock 186 catch 188 may be pivoted through an angle of about 90 deg; moving during this action through a "U-shaped" slot 190 in plate 166 and engaging slot 128 (See Figure 5b) in locking plate 152. In this position detachable member 120 cannot slide in a generally horizontal plane relative to docking plate 152. This prevents heads 132 from sliding free of extension portion 184 of keyhole 180 and thus the detachable member 120 being disengaged from engagement member 118.

The lower (second) section 162 of detachable member 120 is bolted to a projector (not shown) using security bolts. Thus, typically detachable member 120 will be semi-permanently attached to an LCD projector. The projector and member 120 may be readily unlocked and removed from the remainder of the mount as described above. This facilitates sharing of the projector so attached by several users each having a fixing plate 14, pole 16 and engagement member 118 fixed to a part of a building structure.

Optionally, in this embodiment means may also be provided (not shown) to allow detachable member 120 to be tilted relative to engagement member 118. Optionally, the engagement member may be provided with an electrical connector that mates with a further connector on the detachable member so as to provide part or all of the electrical connections to the projector. This offers the advantage that when the detachable member (with an attached projector) is attached to the rest of the mount that all the required electrical connections are simultaneously made.

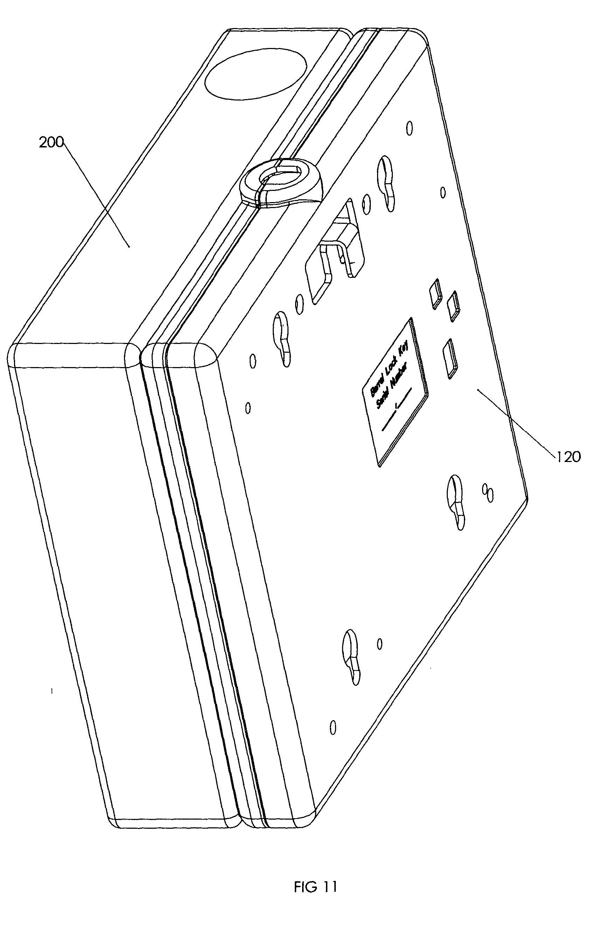

In a further embodiment the detachable member 120 may be formed in an exterior wall of a projector 200; preferably, as part of the top or base of a projector. Thus, Figure 11 shows an example where the detachable member forms an integral part of the base of the projector.

## Claims

1. A projector mount comprising a support member adapted for direct or indirect attachment to the structure of a building and a detachable member adapted for attachment to a projector; and located within the detachable member, locking means that operably engage the support member.

2. A mount according to Claim 1 wherein when the locking means is in a closed position lockingly engages part of the support member and when in the open position is substantially withdrawn into the body of the support member.

3. A projector mount according to any preceding claim wherein prior to locking the detachable member may be attached to the support member by engagement means comprising a recess on one of the members and a protrusion on the other member; wherein the detachable member is attachable to the support member by inserting the protrusion within the recess along a first axis and then sliding one member relative to the other along a second axis.

4. A mount according to any preceding claim wherein recesses or slots are provided in the support member in positions that correspond to feet on the detachable member.

5. A mount according to any preceding claim wherein the detachable member comprises a first section and a second section, held together by connecting means that are inaccessible when the detachable member is attached to the support member.

6. A mount according to any preceding claim wherein a resilient member attached to the support member is provided to urge the detachable member into a position where it will not fall free of the support member.

7. A projector mount comprising an engagement member adapted for direct or indirect attachment to a building structure and a mounting plate adapted for attachment to a projector wherein adjustment means is provided to allow the mounting plate to be moved in a horizontal direction relative to the engagement element in use.

8. A mount according to any preceding claim wherein the mounting plate is pivotally mounted to the engagement member so as to allow the mounting plate to be tilted about a horizontal axis.

9. A mount according to Claim 7 wherein the mounting plate has abutment means that allow detachment of the mounting plate only when the abutment means is vertically aligned with a substantially vertical slot or recess in the engagement member.

10. A projector and mount with a mount according to any preceding claim wherein the detachable member is an integral part of the top or base of a projector.
